# EUROPEAN PATENT APPLICATION

(11) **EP 2 466 415 A2**
(43) Date of publication of application: **20.06.2012**
(21) Application number: 11193596.1
(22) Date of filing: 14.12.2011
(51) Int. Cl.: G06F 1/16

(54) **Electronic apparatus**

(30) Priority: 15.12.2010 KR 20100128652; 15.12.2010 KR 20100128653
(71) Applicant: Samsung Electronics Co., Ltd., Suwon-si, Gyeonggi-do 442-742 (KR)
(72) Inventor: Park, Young Sun, Yongin-si (KR)
(74) Representative: Waddington, Richard

(57) **Abstract**

An electronic apparatus includes a first member, a second member movably connected to the first member to open and close a front surface of the first member, a sliding device movably connecting the second member to the first member, and hinge devices to rotate the sliding device in a state in which the front surface of the first member is opened. The hinge device includes a first hinge member fixed to the first member, a second hinge member fixed to the sliding device and rotatably installed on the first hinge member, and a cam unit interacting with a first cam plane provided on the second hinge member to rotate the second hinge member. When the front surface of the first member is opened, the second member is automatically rotated by the cam unit and is tilted with respect to the first member.

## Description

### BACKGROUND OF THE INVENTION

### 1. Field of the Invention

Embodiments of the present general inventive concept relate to an electronic apparatus having a connecting device to movably connect a second member and a first member.

### 2. Description of the Related Art

A connecting device, such as sliding device, in an electronic apparatus having a first member and a second member serves to movably connect the second member to the first member. Recently, such a sliding device is applied to electronic apparatuses, such as a mobile phone, a tablet PC, a notebook computer, etc.

The electronic apparatus provided with such a sliding device includes a keyboard having a plurality of keys and provided on a front surface of the first member and a display including a liquid crystal panel and provided on a front surface of the second member, and the second member moves on the first member through the sliding device to expose or cover the keyboard.

### SUMMARY OF THE INVENTION

The present general inventive concept provides an electronic apparatus having a connecting device which installs a first member and a second member to move and rotate with respect to each other.

Additional aspects and advantages of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

The foregoing and/or other aspects and utilities of the present general inventive concept may be achieved by providing an electronic apparatus including a first member, a second member movably connected to the first member to open and close a front surface of the first member, a sliding device movably connecting the second member to the first member, and hinge devices to rotate the sliding device in a state in which the front surface of the first member is opened.

Each of the hinge devices may include a first hinge member fixed to the first member, a second hinge member fixed to the sliding device and rotatably installed on the first hinge member, and a cam unit interacting with a first cam surface provided on the second hinge member to rotate the second hinge member.

The first hinge member may include a first fixing part fixed to the first member and a first hinge part on which the second hinge member is rotatably installed, and the second hinge member may include a second fixing part fixed to the sliding device and a second hinge part rotatably installed on the first hinge part and provided with the first cam surface formed at one side thereof.

The cam unit may include a cam member moving forward to and backward from the first cam plane and provided with a second cam surface opposite to the first cam surface, and elastic members, each of which is provided with one end supported by the rear end of the cam member, to elastically support the cam member toward the first cam surface.

The first cam surface may be inclined downward in the forward and backward moving direction of the cam member.

The first hinge member may further include a cam accommodation part in which the cam member is movably accommodated, and the cam unit may further include support members installed at the cam accommodation part to support the other end of each of the elastic members.

A concave part into which the front end of the cam member is inserted to restrict the rotation angle of the second hinge member may be provided at one side of the first cam surface.

The first member may include a rotation guide protrusion protruding from the front surface of the first member to support the rear surface of the second member.

The electronic apparatus may further include a connection line to electrically connect the first member and the second member to each other, the second member may include a rear plate forming the rear surface of the second member and provided with a through hole through which the connection line passes, and the sliding member may include an opening and closing member to open and close the through hole according to movement of the second member.

The sliding device may include a pair of first sliders installed on the first member and provided with first rail parts formed at both sides thereof, a pair of second sliders installed on the second member and provided with second rail parts formed at both sides thereof and movably installed on the first rail parts, a pair of elastic support units, each of which includes a first end rotatably installed on the pair of first slider and a second end provided at the side opposite to the first end and rotatably installed on the rear plate, and an interlocking member to operate the opening and closing member in connection with the pair of elastic support units.

The interlocking member may include a pair of interlocking holes formed at both sides thereof and extending in a direction perpendicular to the moving direction of the second member, the sliding device may further include a pair of interlocking pins passing through the interlocking holes and fixed to interlocking parts provided at the pair of elastic support units, and head parts of the pair of interlocking pins may be supported by parts of the interlocking member adjacent to the pair of interlocking holes.

The electronic apparatus may further include a movement guide installed on the rear plate and provided with a guide hole in which the opening and closing member is movably installed, and a partial region of the guide hole may be located at a position corresponding to the through hole.

The second member may move to open 80% or more of the front surface of the first member.

Each of the hinge devices may include a first hinge member fixed to the first member, a second hinge member fixed to the sliding device and rotatably installed on the first hinge member, and a cam unit to install the first hinge member and the second hinge member such that the first hinge member and the second hinge member are rotated with respect to each other.

The first hinge member may include a first fixing part fixed to the first member and a first hinge part on which the second hinge member is rotatably installed, the second hinge member may include a second fixing part to which the pair of first sliders is fixed and a second hinge part rotatably installed on the first hinge part, and the cam unit may include a first cam provided with a first cam surface, installed on the second hinge part and rotated together with the second hinged part, a second cam provided with a second cam surface opposite to the first cam surface, an elastic washer elastically supporting the second cam toward the first cam, and a hinge shaft sequentially passing through the first hinge part, the second hinge part, the first cam, the second cam and the elastic washer.

The cam unit may further include a stopper disposed between the first hinge part and the second hinge part and provided with two stopper parts protruding in a centrifugal direction to form an obtuse angle, and the first cam may include a latch part latched to a latch groove provided on the second hinge part and protruding between the two stopper parts.

The electronic apparatus may further include a concave part formed on one of the first cam surface and the second cam surface and a convex part formed on the other of the first cam surface and the second cam surface, and the concave part and the convex part may be located at positions corresponding to each other when an angle between the first member and the second member is 10 degrees or less.

Remaining regions of the first cam surface and the second cam surface except for the concave part and the convex part may be formed in parallel with each other.

The foregoing and/or other aspects and utilities of the present general inventive concept may also be achieved by providing an electronic apparatus including a first member, a second member movably installed on the first member to open and close a front surface of the first member, a connection line to electrically connect the first member and the second member to each other, and a sliding device to movably install, or locate, the second member on the first member, wherein the second member includes a rear plate forming a rear surface of the second member and provided with a through hole through which the connection line passes, and the sliding device includes an opening and closing member to open and close the through hole as the second member moves and opens the front surface of the first member.

The foregoing and/or other aspects and utilities of the present general inventive concept may also be achieved by providing an electronic apparatus including a first member, a second member movably connected to the first member to open and close a front surface of the first member, a connection line to electrically connect the first member and the second member to each other, a sliding device movably connecting the second member to the first member, and hinge devices to rotate the sliding device in a state in which the front surface of the first member is opened. The second member may include a rear plate forming a rear surface of the second member and provided with a through hole through which the connection line passes, and the sliding device may include an opening and closing member to open and close the through hole as the second member moves and opens the front surface of the first member.

The foregoing and/or other aspects and utilities of the present general inventive concept may also be achieved by providing an electronic apparatus including a first member having a keyboard, a second member having a display, and a connecting device to connect the second member and the first member, and to move the first member and the second member in a sliding direction and in a rotating direction.

The connecting device may place the first member and the second member in a folding state such that the keyboard of the first member is covered by the first member and a display screen of the display of the second member is exposed to an outside thereof and is formed as an external appearance of the electronic apparatus.

The connecting device may include a sliding device to move the first member and the second member in a sliding direction from the folding state to an open state such that the keyboard of the first member is exposed.

The connecting device may include a hinge device to rotate the second member with respect to the first member between the open state and a rotation state.

The connecting device may include a hinge device connected to the second member to rotate the first member and the second member with respect to each other, and a sliding device having a first slide connected to the hinge device and a second slide connected to the first member to slide along the first hinge.

The sliding device of the connecting device may include an elastic unit to move the first member and the second member according to a parallel relationship of a sliding direction according to an external force from an initial state to intermediate state and then to move the first member and the second member from the intermediate state to an open state without the external force.

The hinge device of the connecting device may include a cam to provide a force to rotate the first member and the second member from an open state to a rotation state at a predetermined angle between the first member and the second member.

The connecting device may include a connecting line to electrically connect the first member and the second member, a through hole formed on a surface of the second member to provide a space as a passage of the connecting line, and an open/closing member to move according a sliding movement of the connecting device to open and close the through hole.

The electronic apparatus may further include a protrusion unit formed to provide an initial force to the second member to rotate the second member with respect to the first member when the connecting member moves the second member from a folding state to an open state with respect to the first member.

The connecting device may move the first member and the second member in the sliding direction between a folding state where the keyboard is not exposed and the display is exposed and an open state where the keyboard is exposed while the display is exposed, and may rotate the first member and the second member in the rotating direction between the open state and an angle state where the display and the keyboard form an angle less than 180 degrees.

The connecting device may displace the first member and the second member in a folding state where the display is in an exposed state and the keyboard is in a closed state such that the electronic apparatus is operated with the display without using the keyboard.

The connecting device may displace the first member and the second member in a parallel relationship and may displace the first member and the second member in a rotation angle relationship where the display and the keyboard form an angle from the parallel relationship.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIGS. 1, 2, and 3 are perspective views illustrating an operation of an electronic apparatus according to an embodiment of the present general inventive concept;
FIG. 4 is a perspective view of a sliding device applied to an electronic apparatus according to an embodiment of the present general inventive concept;
FIG. 5 is an exploded perspective view of the sliding device of FIG. 4 according to an embodiment of the present general inventive concept ;

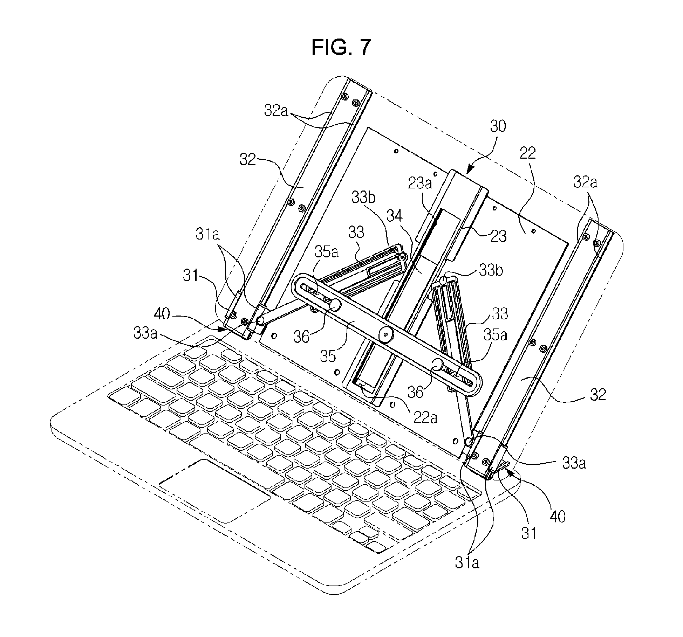

FIGS. 6 and 7 are perspective views illustrating an operation of the sliding device of FIGS 4 and 5 according to an embodiment of the present general inventive concept;
FIG. 8 is an exploded perspective view of a hinge device applied to an electronic apparatus in accordance with the embodiment of the present invention;
FIGS. 9, 10, and 11 are sectional views illustrating an operation of the hinge device of FIG. 8 according to an embodiment of the present general inventive concept;
FIG. 12 is a perspective view illustrating an operation of the hinge device of FIG. 8 according to an embodiment of the present general inventive concept;
FIGS. 13 and 14 are side views illustrating an electronic apparatus an operation of the hinge device;
FIG. 15 is an exploded perspective view illustrating a sliding device applied to an electronic apparatus according to an embodiment of the present general inventive concept;
FIG. 16 is an exploded perspective view illustrating a hinge device applied to an electronic apparatus according to an embodiment of the present general inventive concept;
FIG. 17 is a side view illustrating an electronic apparatus according to an embodiment of the present general inventive concept; and

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

Hereinafter, an electronic apparatus having a connecting device, such as a sliding device and/or a hinge device, according to an embodiment of the present general inventive concept will be described in detail with reference to the accompanying drawings.

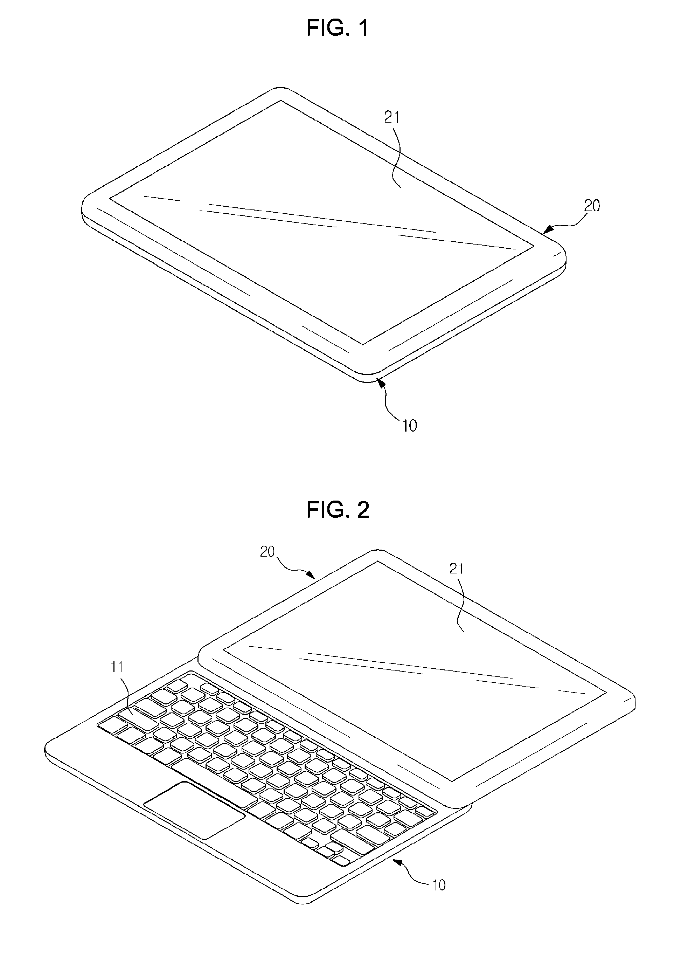

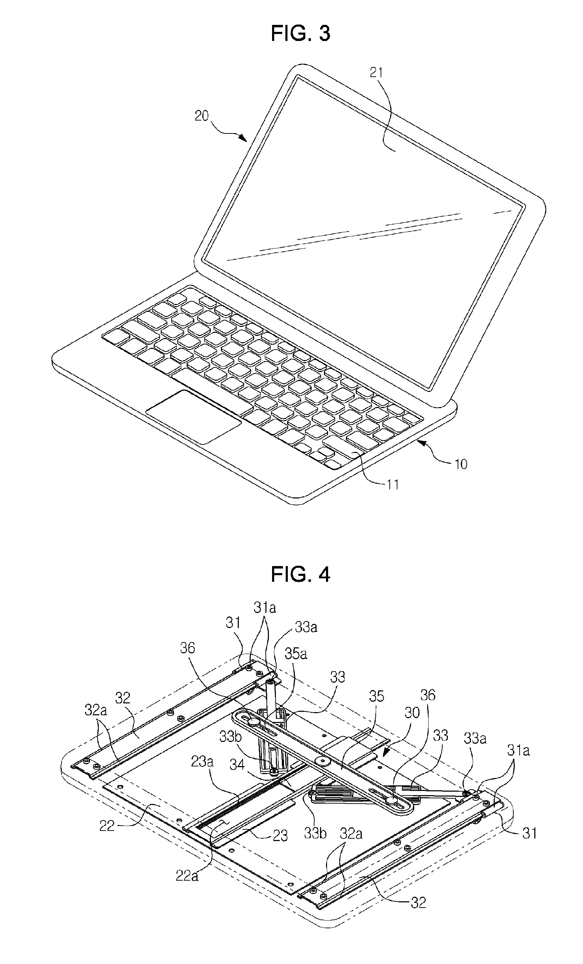

The electronic apparatus according to an embodiment of the present general inventive concept, as illustrated in FIG. 1, includes a first member 10 and a second member 20 to cover a front surface of the first member 10. The second member 20 is movably installed, or located, on the first member 10 to open the front surface of the first member 10, as illustrated in FIG. 2, and the second member 20 is rotated to be tilted with respect to the first member 1 in a state in which the front surface of the first member 10 is opened, as illustrated in FIG. 3.

A keyboard 11 including a plurality of keys representing various characters and marks is provided on the front surface of the first member 10, and a display 21 displaying an image is provided on the front surface of the second member 20. The electronic apparatus may have a first state in which the second member 20 covers the keyboard 11 provided on the front surface of the first member 10, and a second state in which the second member 20 moves through a sliding device 30 to expose the keyboard 11 provided on the first member 10 when the keyboard 11 needs to be used as an input unit.

The first member 10 and the second member 20 are electrically connected to each other through a connection line to receive and/or transmit an electrical signal. The connection line may be a flexible circuit board or cable.

The display 21 of the second member 20 may display the image according to the electronic signal. The display 21 of the second member 20 may be a touch panel to be used as a display screen to display an image and/or to be used an input screen to display an image and to receive an input signal through the image. The input signal can also be used as the electrical signal.

The electronic apparatus may have a process unit or control unit to process data corresponding to the electrical signal or the input signal inputted through the keyboard 11 and/or the display 21. The process unit may be disposed in at least one of the first member 10 and the second member 20 of the electronic apparatus, and the processed data can be used to display the image. The processing unit may be disposed in the first member 10. It is also possible that the processing unit may be disposed in the second member 20 to process data corresponding to the transmitted electrical signal or the input signal inputted through the keyboard 11 and/or the display 21 of the second member.

The electronic apparatus may be in a first position where the first member 10 and the second member 20 are folded to expose the display 21 of the second member 20, in a second position to perform a sliding operation where at least a portion of the first member 10 and the second member 20 is not folded and where the first member 10 and the second member 20 slide with respect to each other, and in a third position to perform a rotation operation to rotate the first member 10 and the second member 20 with respect to each other.

In the first position, the electronic apparatus can be used as a tablet such that the display 21 of the second member 20 is used as a display screen and an input screen.

The first member 10 and the second member 20 may have a power switch (not illustrated) formed on a surface thereof to turn on the electronic apparatus to operate one or more functions thereof.

It is possible that the power switch of the second member 20 can be used to turn on the electronic apparatus in the first position such that the electronic apparatus is used as a tablet. It is also possible that the power switch of the first member 10 and/or the second member 20 can be used to turn on the electronic apparatus in the second position or the third position. The power switch of the first member 10 may be disposed on a side surface of the first member 10 such that the power switch of the first member 10 can be used to turn on the electronic apparatus in the first position. It is also possible that the power switch of the second member 20 is disposed on a front surface (screen surface) to turn on the electronic apparatus in the first position. However, the present general inventive concept is not limited thereto. It is possible that the power switch is formed on a side surface of the electronic apparatus. At least one of the power switches of the first member 10 and the second member 20 can be used to turn on the electronic apparatus in a selected one of the first, second, and third positions.

The electronic apparatus may have a wired or wireless interface to communicate with an external device to receive data or transmit data. The interface may be disposed in at least one of the first member 10 and the second member 20 and may be connected to the processing unit. The electronic apparatus may also have a power terminal to receive a power to operate the electronic apparatus. The power terminal may be formed on at least one of the first member 10 and the second member 20 to operate the electronic apparatus.

The electronic apparatus may have additional terminals to be connected to another external device. The second terminals may be formed on at least one of the first member 10 and the second member 20.

In order to movably install the second member 20 on the first member 10, the sliding device 30 to movably install the second member 20 on the first member 10 is disposed between the first member 10 and the second member 20, as illustrated in FIG. 4.

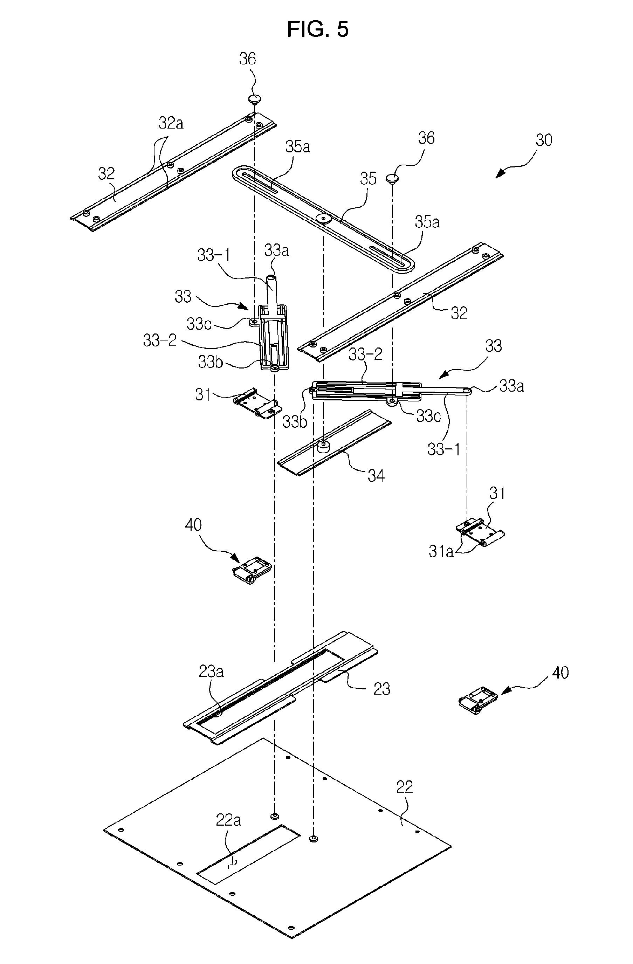

The sliding device 30, as illustrated in FIG. 5, includes one or more first sliders 31 installed on the first member 10, one or more second sliders 32 movably installed on the first sliders 31, and one or more elastic support units 33 to move the second sliders 32 in a semi-automatic manner where an initial force is applied to the elastic support units 33 from an initial state to an intermediate state when the first sliders 31 and the second sliders 32 move with respect to each other, and then the first sliders 31 and the second sliders 32 can further move with respect to each other from the intermediate state to another state using the force applied to the elastic support units 33., without any further external force than the initial force. However, the present general inventive concept is not limited thereto.

It is possible that the sliding device 30 can be implemented without the elastic support units 33 such that the first slider 31 and the second slider 32 move with respect to each other in a manual manner using a force supplied from a user from the initial state to the another state.

The first slider 31 is provided with first rail parts 31 a formed at both sides thereof such that the second slider 32 is movably installed on a corresponding one of the first rail parts 31 a, and the second slider 32 is provided with second rail parts 32a formed at both sides thereof and movably installed on a corresponding one of the first rail parts 31 a.

The elastic support unit 33 may include a first support 33-1 having a first end 33a provided at one side thereof and movably installed on or connected to a portion of the first slider 31, and a second support 33-2 having a second end 33b provided at the other side thereof and rotatably installed on a rear plate 22 forming a rear surfaces of the second member 20 opposite to the display 21 disposed on the front surface thereof. Although not illustrated in the drawings, an elastic element, for example, a spring, may be installed within the elastic support unit 33 and may be connected between the first support 33-1 and the second support 33-2 of the elastic support unit 33 such that an interval between both ends 33a and 33b of the elastic support unit 33 can be elastically changed.

A connecting element can be provided to connect the first end 33a to the portion of the first slider 31, and another connecting element can also be provided to connect the second end 33b to the rear end 22 of the second member 20. The connecting elements can be formed as a part of the first end 33a and/or the second end 33b or a part of the first slider 31 and/or the rear plate 22 of the second member 20.

In this embodiment, in order to uniformly move both sides of the second member 20, a pair of first sliders 31 and a pair of second sliders 32 are disposed in parallel at both sides of the first member 10 and the second members 20, and a pair of elastic support units 33 is provided such that the first ends 33a provided at sides of the two elastic units 33 are rotatably installed on the two first sliders 31 and the second ends 33b provided at the other ends of the two elastic units 33 are rotatably installed on the rear plate 22.

A through hole 22a through which the above-described connection line passes is provided on the rear plate 22 of the second member 20. The through hole 22a extends in a moving direction of the second member 20 with respect to the first member 10 to prevent the connection line from being caught by the end of the through hole 22a during the movement of the second member 20.

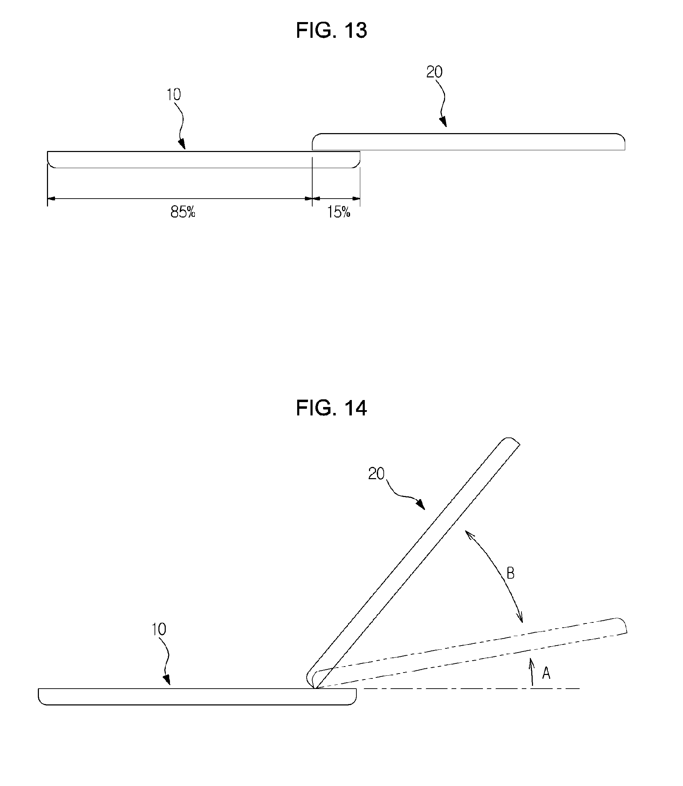

In a state in which the second member 20 moves and thus opens the front surface of the first member 10, a first predetermined portion (or a major portion), for example, 85%, of the front surface of the first member 10 is exposed to an outside thereof and a second predetermined portion (or a minor portion), for example, 15%, of the front surface of the first member 10 is covered by the second member 20, as illustrated in FIG. 13. In this state, the first predetermined portion of the rear surface of the second member 20 is exposed to the outside in the same manner as the front surface of the first member 10. Therefore, if the first predetermined portion of the rear surface of the second member 20 is exposed to the outside, it is possible that the connection line or components installed within the second member 20 can be seen from the outside through the above through hole 22a, and thereby a foreign material, for example, dust, can be easily introduced into an inside of the second member 20 through the through hole 22a as well as the appearance quality of the electronic apparatus is lowered through the through holes 22a.

Therefore, the sliding device 30, as illustrated in FIG. 5, includes an opening and closing member 34 to open and close the through hole 22a according the movement of the second member 20, and an interlocking member 35 to move the opening and closing member 34 in connection with the movement of the second member 20, and the opening and closing member 34 is configured to close the through hole 22a in a state in which the rear surface of the second member 20 is exposed to the outside. Here, a movement guide 23 provided with a guide hole 23a in which the opening and closing member 34 is movably installed is installed on the rear surface 22. The movement guide 23 is fixedly coupled to, detachably attached to, or formed on the rear plate 22 of the second member 20. A partial region of the guide hole 23a corresponds to the through hole 22a. Therefore, when the opening and closing member 34 is disposed at one side of the guide hole 23a, the opening and closing member 34 closes the through hole 22a, and when the opening and closing member 34 is disposed at the other side of the guide hole 23a, the opening and closing member 34 opens the through hole 22a.

When the opening and closing member 34 closes the through hole 22a, at least a space is provided between the opening and closing member 34 and the through hole 22a such that the connecting line is disposed in the provided space to maintain a connection between the first member 10 and the second member 20.

The interlocking member 35 extends in a direction perpendicular to the moving direction of the second member 20, and is provided with a pair of interlocking holes 35a at both sides thereof such that the two elastic support units 33 are rotatably and movably installed at the interlocking holes 35a. The opening and closing member 34 is installed at a center portion of the interlocking member 35 in the moving direction of the second member 20. A connecting element is provided to connect the opening and closing member 34 and the interlocking member 35 or is formed as a part of the opening and closing member 34 and/or the interlocking member 35. The two interlocking holes 35a extend in the direction perpendicular to the moving direction of the second member 20, and interlocking pins 36 passing through the corresponding interlocking holes 35a, installed at interlocking parts 33c provided on the elastic support units 33, and provided with head parts supported by parts of the interlocking member 35 adjacent to the interlocking holes 35a are installed at the interlocking holes 35a.

Therefore, in a state in which the front surface of the first member 10 is covered by the second member 20, as illustrated in FIG. 1, an opened state of the through hole 22a is maintained, as illustrated in FIG. 4. In such a state, when a user applies a force to the second member 20 to move the second member 20 with respect to the first member 10, the second sliders 32 move along the first sliders 31. As the second sliders 32 move with respect to the first sliders 31, the elastic support units 33 are rotated with respect to the rear plate 22 about the first ends 33a installed on the first sliders 31, and thus a distance between both ends 33a and 33b of the elastic support units 33 is reduced. Here, the springs disposed within the elastic support units 33 or between the first and second supports 33-1 and 33-2 are elastically deformed and thus compressed.

After the second member 20 further moves by more than a designated distance and thus the elastic support units 33 are further rotated by more than a designated angle, a direction in which elastic restoring force of the elastic support units 33 is applied is changed into the opposite direction. The distance between both ends 33a and 33b of the elastic support units 33 is increased by the elastic restoring force of the elastic support units 33, and the elastic support units 33 are continuously rotated in the rotating direction thereof about the first ends 33a installed on the first sliders 31. The elastic restoring force of the elastic support units 33 is transmitted to the second member 20 through the rear plate 22, and thus the second member 20 further moves with respect to the first member 10 by another designated distance in the moving direction according to the elastic restoring force of the elastic support units 33. That is, when the second member 20 moves by the designated distance, the second member 20 further moves from the designated distance to another designated distance according to the elastic restoring force generated from the elastic support units 33. Thus, the second member 20 is operated in the semi-automatic manner to open and close the front surface of the first member 10 and is moved to a position to another position with respect to the first member 10.

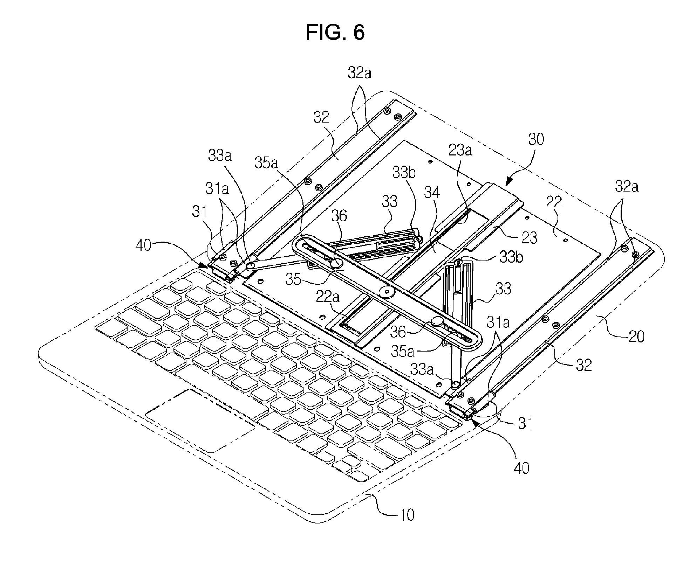

Therefore, the second sliders 32 move along the first sliders 31, as illustrated in FIG. 6, and the second member 20 moves according to the second sliders 32 to open the front surface of the first member 10, as illustrated in FIG. 2.

During a rotation of the elastic support units 33, since both sides of the interlocking member 35 are respectively installed on the two elastic support units 33 through the interlocking pins 36, the interlocking member 35 moves in the moving direction of the second member 20 according to the movement of the second member 20 with respect to the first member 10, and the opening and closing member 34 moves together with the interlocking member 35 in the moving direction of the second member 20.

However, since the opening and closing member 34 moves by a shorter distance than the second member 20, as illustrated in the drawings, it appears that the opening and closing member 34 moves in the direction opposite to the moving direction of the second member 20 as seen from the second member 20. Therefore, the opening and closing member 34 moves along the guide hole 23a provided on the movement guide 23 and thus closes the through hole 22a.

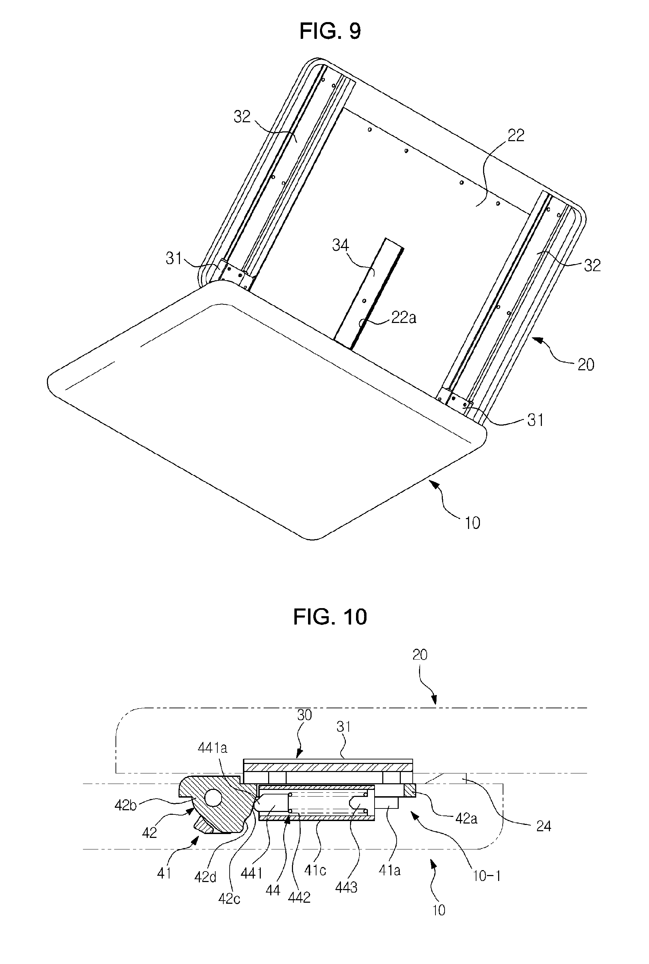

In the state in which the front surface of the first member 10 is opened, the through hole 22a is closed by the opening and closing member 34, as illustrated in FIG. 9, and thus, even if the rear surface of the first member 10 is observed from the outside, exposure of the connection line or the internal components of the second member 10 through the through hole 22a and introduction of a foreign substance into the second member 10 through the through hole 22a are prevented.

Further, the sliding device 30 in accordance with this embodiment is rotatably installed on the first member 10 through hinge devices 40, as illustrated in FIG. 5, and thus the second member 20 may be rotated to be tilted with respect to the first member 10, as illustrated in FIG. 3, in a state in which the front surface of the first member 10 is opened.

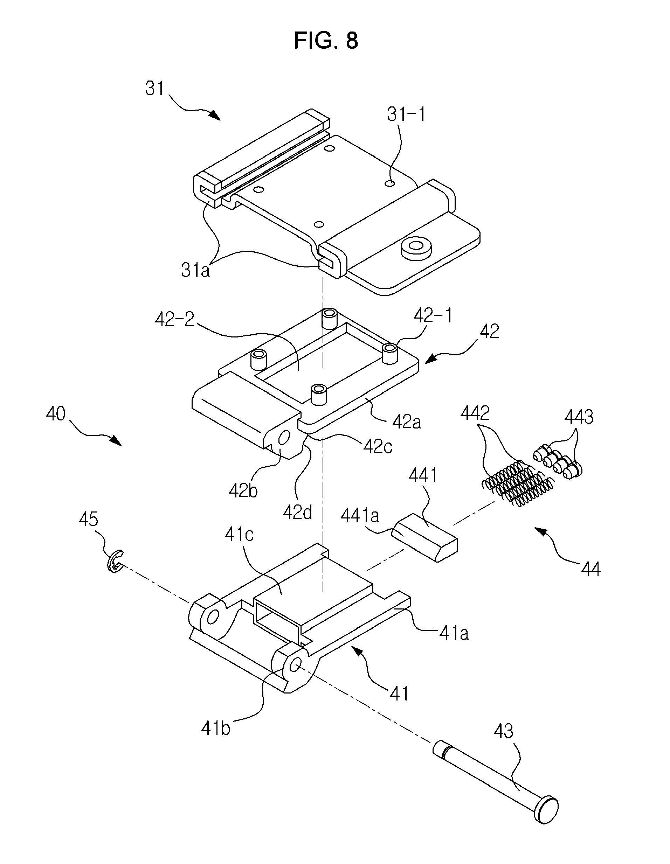

The hinge device 40, as illustrated in FIGS. 8 and 10, includes a first hinge member 41 fixed to the first member 10, a second hinge member 42 rotatably installed on the first hinge member 41 and installed on the first slider 31, a hinge shaft 43 to rotatably install the second hinge member 42 on the first hinge member 41, and a cam unit 44 elastically supporting the second hinge member 42 to rotate the second hinge member 42 with respect to the first hinge member 41 or to maintain a position of the second hinge member 42 with respect to the first hinge member 41.

The first hinge member 41 includes a first fixing part 41 a fixed to the first member 10 and a first hinge part 41b on which the second hinge member 42 is rotatably installed using the hinge shaft 43. The second hinge member 42 includes a second fixing part 42a fixed to the first slider 31 and a second hinge part 42b rotatably installed on the first hinge part 41 b using the hinge shaft 43 and provided with a first cam surface 42c formed at one side thereof to interact with the cam unit 44. The hinge shaft 43 passes through the first hinge part 41b and the second hinge part 42b, and a coupling element , such as an E-ring 45, is installed at the front end of the hinge shaft 43 to maintain installation of the hinge shaft 43 on the first hinge part 41 b and the second hinge part 42b. The second hinge member 42 and first slider 31 may have coupling elements 42-1 and 31-1 to fixedly connect the second member 42 and the first slider 31.

The cam unit 44 includes a cam member 441 to move forward to and backward from the first cam surface 42c and provided with a second cam surface 441a disposed to face the first cam surface 42c, and elastic members 442, each of which is provided with one end supported by a rear end of the cam member 441, to support the second cam surface 441 a by the first cam surface 42c to elastically support the cam member 441 toward the first cam surface 42c.

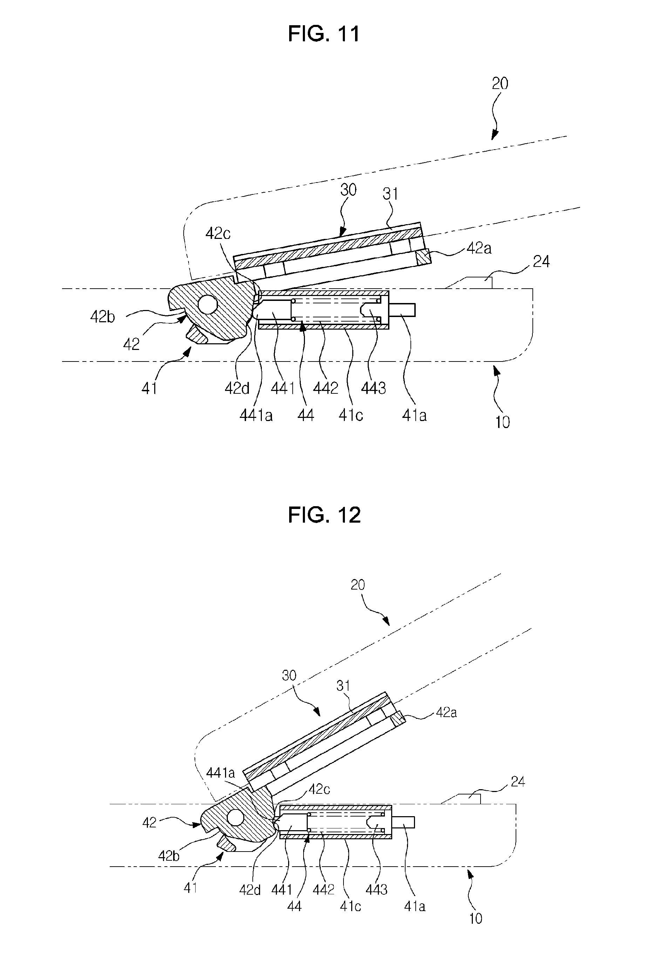

The first cam surface 42c includes a portion inclined downward in the moving direction of the cam member 441. Therefore, since an elastic restoring force of the elastic members 442 transmitted by the first cam surface 42c and the second cam surface 441 a through the cam member 441 serves as a force to push one side of the second support member 42 provided with the first cam plane 42c upward, the second hinge member 42 is rotated about the hinge shaft 43, and the second member 20 connected to the second hinge members 42 through the sliding device 30 is rotated by a designated angle with respect to the first member 10, as illustrated in FIG. 11. In this embodiment, the first cam surface 42c and the second cam surface 441 a are designed to rotate the second member 20 with respect to the first member 10 by an angle of about 15 degrees, for example.

Further, a concave part 42d is formed at one side of the first cam plane 42c such that the front end of the second cam surface 441 a of the cam member 441 is inserted into the concave part 42d. The concave part 42d may restrict a rotation angle of the second hinge member 42, that is, to restrict a rotation angle of the second member 20 with respect to the first member 10. When the front end of the second cam surface 441 of the cam member 441 is inserted into the concave part 42d, as illustrated in FIG. 12, a rotation of the second hinge member 42 and the second member 20 is stopped or prevented and thus the rotation angle of the second member 20 is restricted by the concave part 42d. The electronic apparatus in accordance with this embodiment is designed such that the front end of the second cam surface 441 a of the cam member 441 is accommodated within the concave part 42d when the second hinge member 42 forms an angle of 50 degrees, for example, with respect to the first hinge member 41, and thus the rotation angle of the second member 20 is restricted to 50 degrees, for example.

Therefore, when the second member 20 moves to open the front surface of the first member 10 by the sliding device 30 and is automatically rotated by the cam unit 44 to form an angle of 15 degrees, for example, with respect to the first member 10, as illustrated in a section A of FIG. 14. Further, the second member 20 is rotated to a random position desired by a user in a section B of FIG. 14 in which the angle of the second member 20 with respect to the first member 10 is 15 to 50 degrees.

A cam accommodation part 41 c is provided in the first hinge member 41 such that the cam unit 44 is installed in the cam accommodation part 41a of the first hinge member 41, elastic members 442 are accommodated within the cam accommodation part 41 c, and the cam member 441 is movably installed in the cam accommodation part 41 c. Further, support members 443 are installed at the cam accommodation part 41 c to support one of each of the elastic members 442 provided with the other end supported by the cam member 441. The support members 443 may be fixedly coupled to or may be formed as a part of the cam accommodation part 41 c. The cam accommodation part 41c may be disposed in an opening 42-2 formed in the second hinge member 42 as illustrated in FIG. 8.

The first member 10 may have a recess portion 10-1 to provide a space to accommodate the first hinge member 41 such that a portion of the first hinge member protrudes from a major plane of the front surface of the first member 10 as illustrated in FIG. 10. Accordingly the first hinge member 41 is fixed to or fixedly coupled to the first member 10.

In a state in which the second cam plane 441 a is supported by the first cam surface 41 c, as illustrated in FIG. 10, a static friction force is applied between the first cam surface 41 c and the second cam surface 441 a. Therefore, even if the second member 20 moves to open the front surface of the first member 10, a rotation of the second hinge member 42 by the cam unit 44 may not occur but prevented.

Therefore, a rotation guide protrusion 24 is formed on the first member 10to generate a rotation of the second member 20 according to an opening operation of the front surface of the first member 10. The rotation guide protrusion 24 protrudes upward from the upper surface of the first member 10 and the upper surface of the rotation guide protrusion 24 is supported by a lower surface of the second member 20. The rotation guide protrusion 24 slightly pushes the second member 20 upward, thus finely rotating the second member 20 and the second hinge members 42.

The rotation guide protrusion 24 may have a height from a major plane of the front surface of the first member 10 equal to or higher than a height of the portion of the first hinge member protruding from the major plane of the front surface of the first member 10. Accordingly, the second member 20 may maintain a distance with the first member 10 when the first member 10 and the second member 20 are in the folded state and/or in the slinging state.

The rotation guide protrusion 24 may be disposed to contact a portion of the second member 20. It is possible that the contact portion of the second member 20 may not overlap the first slider 31 and/or hinge device 40. However, the present general inventive concept is not limited thereto. It is possible that the contact portion of the second member 20 may overlap the first slider 31 and/or hinge device 40.

The second member 20 may have a portion formed on the lower surface thereof to correspond to the rotation guide protrusion 24 such that the rotation guide protrusion 24 may contact the portion of the second member 20 to provide a force to lift the second member 20 from the first member 10 when the front surface of the first member 10 is in the open position. Accordingly, the second member 20 can automatically rotate with respect to the first member 10 to a predetermined angle.

When the second hinge member 42 is finely rotated, a kinetic fiction force less than a static friction force is applied between the first cam surface 41c and the second cam surface 441 a, and thus the first cam surface 41 c moves along the second cam surface 441 a and the second hinge member 42 is rotated to a set angle by the cam unit 44.

In this embodiment, the second member 20 is exemplarily configured to open 85% of the front surface of the first member 10. If 80% or more of the front surface of the first member 10 is opened, the opening and closing member 34 needs to be modified to properly open and close the through hole 22a.

The predetermined portion of 15% of the front surface of the first member 10 may have a length in the sliding direction of the second member 20 with respect to the first member 10. The length of the predetermined portion may be equal to or longer than an operational length of the hinge device 40 and/or the first slider 31.

The rotational angle of the second member 20 with respect to the first member 10 may be variable according to a user preference and design of the electronic apparatus.

The first member 10 and the second member 20 may be separable from each other by separating the elastic support units 33 together with the open/closing member 34, and the interlocking member 35 from the second slider 32 and the second rear plate of the second member.

It is possible that the first slider 31 and/or the second slider 32 may have a stopper member (not illustrated) to prevent separation of the first slider 31 and the second slider 32. Accordingly, the first member 10 and the second member 20 may be prevented from being separated from each other in the folding state, the sliding state, and the rotating state.

Hereinafter, installation of a sliding device applied to an electronic apparatus according to an embodiment of the present general inventive concept will be described in detail with reference to the following drawings.

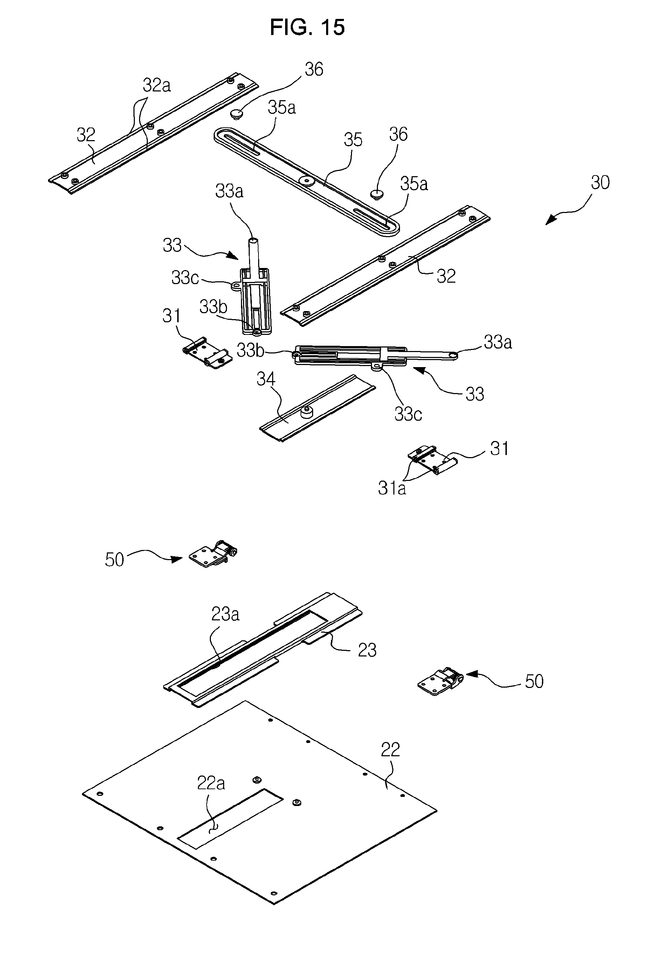

The sliding device 30 according to an embodiment of the present general inventive concept is rotatably installed on the first member 10 through hinge devices 50, as illustrated in FIG. 15, and rotates the second member 20 to tilt the second member 20 with respect to the first member 10 in the state in which the front surface of the first member 10 is opened, as illustrated in FIG. 3.

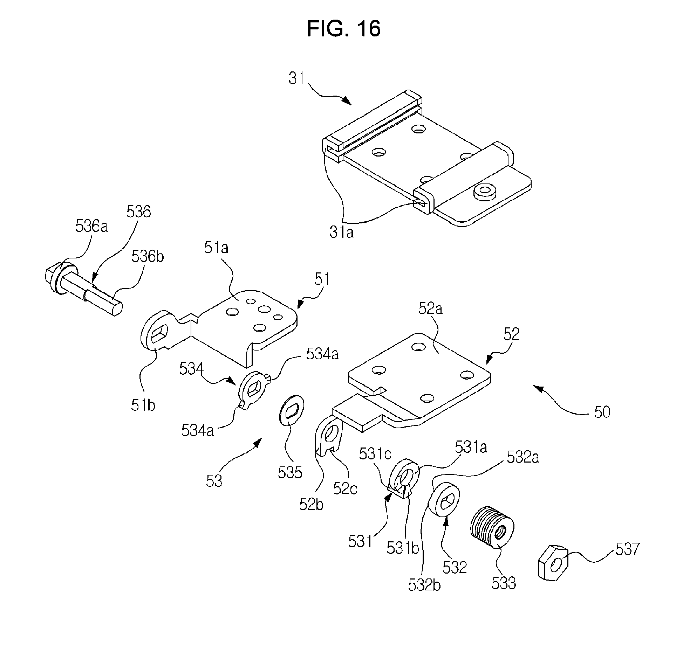

The hinge device 50, as illustrated in FIG. 16, includes a first hinge member 51 fixed to the first member 10, a second hinge member 52 rotatably installed on the first hinge member 51 and rotatably installed on the first slider 31, and a cam unit 53 connecting the first hinge member 51 and the second hinge member 52 to each other to rotate the first hinge member 51 and the second hinge member 52 with respect to each other. The first hinge member 51 may be disposed outside of the second hinge member 52 or may be disposed inside of the second hinge member, with respect to the first slider 31.

The first hinge member 51 includes a first fixing part 51 a fixed to the first member 10 and a first hinge part 51 b on which the second hinge member 52 is rotatably installed. The second hinge member 52 includes a second fixing part 52a fixed to the first slider 31 and a second hinge part 52b rotatably installed on the first hinge part 51 b.

The cam unit 53 includes a first cam 531 provided with a first cam surface 31 a at one side thereof, a second cam 532 provided with a second cam surface 532a to face the first cam surface 531 a, an elastic member, such as an elastic washer 533, to elastically support the second cam 532 toward the first cam 531 to support the second cam surface 532a on the first cam surface 531 a, a stopper 534 disposed between the first hinge part 51 b and the second hinge part 52b to restrict a rotation angle of the second hinge member 52 with respect to the first hinge member 51, a washer 535 disposed between the second hinge part 52b and the stopper 534, and a hinge shaft 536 sequentially passing through the first hinge part 51 b, the stopper 534, the washer 535, the second hinge part 52b, the first cam 531, the second cam 532 and the elastic washer 533.

The hinge shaft 536 includes a head part 536a supported by the first hinge part 51 b, and a shaft part 536b extended from the head part 536a to sequentially pass through the first hinge part 51 b, the stopper 534, the washer 535, the second hinge part 52b, the first cam 531, the second cam 532 and the elastic washer 533, and provided with a front end to which a nut 537 supporting one end of the elastic washer 533 is connected.

The stopper 534 includes two stopper parts 534a protruding in a centrifugal (or radial) direction to form an obtuse angle. The first cam 531 includes a latch part 531 b latched to the second hinge part 52b to rotate the first cam 531 together with the first hinge member 52 and protruding between the two stopper parts 534a to be latched to the stopper parts 534a according to the rotation angle of the second hinge member 52. A latching groove 52c is provided on the second hinge member 52 to have a shape corresponding to the latch part 531 b such that the latch part 531 b is inserted into the latching groove 52c. Therefore, the first cam 531 receives a force transmitted through the latch part 531 b latched to the latch groove 52c according to a rotation of the second hinge member 52 and is rotated together with the second hinge member 52, and when the latch part 531 b is caught by the stopper part 534a during a rotation of the first cam 531, a rotation of the second hinge member 52 is stopped. Accordingly, the rotation angle of the second member 20 is restricted by the stopper 534.

A concave part 531 c is provided at one side of the first cam surface 531 a, and a convex part 532b is provided at one side of the second cam surface 532a. In this embodiment, the concave part 531b and the convex part 532b are designed to be located at positions corresponding to each other when the second member 20 forms an angle of 10 degrees or less, for example, with respect to the first member 10. Therefore, when the first member 10 and the second member 20 form an angle of 10 degrees or less, the concave part 531 b and the convex part 532b interact with each other to rotate the second member 20, and thus dispose the second member 20 in parallel with the first member 10. The second member 20 is maintained to be parallel with the first member 10 so that the second member 20 can move with respect to the first member 10 through the sliding device 30.

Remaining regions of the first cam surface 531 a and the second cam surface 532a except for the concave part 531b and the convex part 532b form surfaces parallel with each other, thereby allowing the first hinge member 51 and the second hinge member 52 to be stopped at a random position.

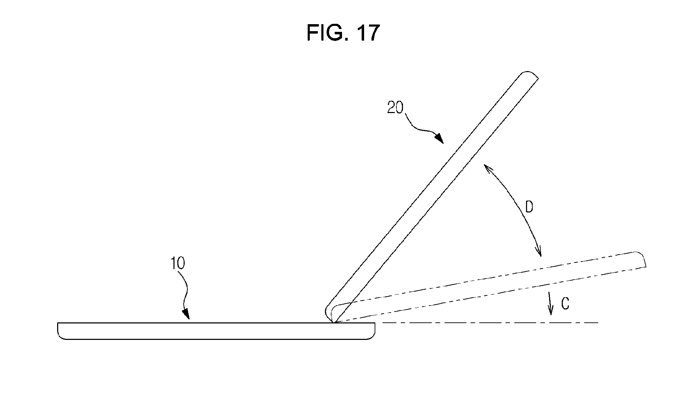

Therefore, the second member 20 is rotated by the cam unit 53 to be disposed in parallel with the first member 10 when the angle between the first member 10 and the second member 20 is 10 degrees or less, as shown in section C of FIG. 17. Further, the second member 20 is rotated to a random position according to a user preference in a section D of FIG. 17 in which the angle between the first member 10 and the second member 20 is more than 10 degrees, for example.

As is apparent from the above description, in an electronic apparatus having a connecting device, such as a sliding device, according to an embodiment of the present general inventive concept, the sliding device is rotated by cam units of hinge devices after the front surface of a first member is opened, and thus a second member is automatically rotated to form a designated angle with the first member and is tilted with respect to the first member.

Further, a through hole provided on a rear plate is opened and closed by an opening and closing member moving according to a movement of the second member, thereby preventing exposure of a connection line or internal components through the through hole and preventing introduction of foreign substances into the second member through the through hole in a state in which the front surface of the first member and the rear surface of the second member are opened.

Although a few embodiments of the present general inventive concept have been shown and described, it will be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electronic apparatus comprising:
a first member;
a second member movably connected to the first member to open and close a front surface of the first member;
a sliding device movably connecting the second member to the first member; and
hinge devices to rotate the sliding device in a state in which the front surface of the first member is opened.

2. The electronic apparatus according to claim 1, wherein each of the hinge devices includes a first hinge member fixed to the first member, a second hinge member fixed to the sliding device and rotatably installed on the first hinge member, and a cam unit to interact with a first cam surface provided on the second hinge member to rotate the second hinge member.

3. The electronic apparatus according to claim 2, wherein:
the first hinge member includes a first fixing part fixed to the first member and a first hinge part on which the second hinge member is rotatably installed; and
the second hinge member includes a second fixing part fixed to the sliding device and a second hinge part rotatably installed on the first hinge part and provided with the first cam surface formed at one side thereof.

4. The electronic apparatus according to claim 3, wherein the cam unit includes a cam member to move forward to and backward from the second hinge part along the first cam surface and provided with a second cam surface to face the first cam surface, and elastic members, each of which is provided with one end supported by a rear end of the cam member, to elastically support the cam member toward the first cam surface.

5. The electronic apparatus according to claim 4, wherein the first cam surface is inclined downward in the forward and backward moving direction of the cam member.

6. The electronic apparatus according to claim 4, wherein:
the first hinge member further includes a cam accommodation part in which the cam member is movably accommodated; and
the cam unit further includes support members installed at the cam accommodation part to support the other end of each of the elastic members.

7. The electronic apparatus according to claim 4, wherein a concave part into which a front end of the cam member is inserted to restrict a rotation angle of the second hinge member is provided at one side of the first cam surface.

8. The electronic apparatus according to claim 1, wherein the first member includes a rotation guide protrusion protruding from the front surface of the first member to support a rear surface of the second member.

9. The electronic apparatus according to claim 1, further comprising:
a connection line to electrically connect the first member and the second member to each other,
wherein:
the second member includes a rear plate forming a rear surface of the second member and provided with a through hole through which the connection line passes; and
the sliding member includes an opening and closing member to open and close the through hole according to a movement of the second member.

10. The electronic apparatus according to claim 9, wherein the sliding device includes a pair of first sliders installed on the first member and provided with first rail parts formed at both sides thereof, a pair of second sliders installed on the second member and provided with second rail parts formed at both sides thereof and movably installed on the first rail parts, a pair of elastic support units, each of which includes a first end rotatably installed on the pair of first slider and a second end provided at the side opposite to the first end and rotatably installed on the rear plate, and an interlocking member to operate the opening and closing member in connection with the pair of elastic support units.

11. The electronic apparatus according to claim 10, wherein:
the interlocking member includes a pair of interlocking holes formed at both sides thereof and extending in a direction perpendicular to a moving direction of the second member;
the sliding device further includes a pair of interlocking pins passing through the interlocking holes and fixed to interlocking parts provided at the pair of elastic support units; and
head parts of the pair of interlocking pins are supported by parts of the interlocking member adjacent to the pair of interlocking holes.

12. The electronic apparatus according to claim 10, further comprising:
a movement guide installed on the rear plate and provided with a guide hole in which the opening and closing member is movably installed,
wherein a partial region of the guide hole is located at a position corresponding to the through hole.

13. The electronic apparatus according to claim 1, wherein the second member moves to open a major portion of the front surface of the first member.

14. The electronic apparatus according to claim 1, wherein each of the hinge devices includes a first hinge member fixed to the first member, a second hinge member fixed to the sliding device and rotatably installed on the first hinge member, and a cam unit to install the first hinge member and the second hinge member such that the first hinge member and the second hinge member are rotated with respect to each other.

15. The electronic apparatus according to claim 14, wherein:
the first hinge member includes a first fixing part fixed to the first member and a first hinge part on which the second hinge member is rotatably installed;
the second hinge member includes a second fixing part to which the pair of first sliders is fixed and a second hinge part rotatably installed on the first hinge part; and
the cam unit includes a first cam provided with a first cam surface, installed on the second hinge part and rotated together with the second hinged part, a second cam provided with a second cam surface to correspond to the first cam surface, an elastic washer to elastically support the second cam toward the first cam, and a hinge shaft to sequentially pass through the first hinge part, the second hinge part, the first cam, the second cam and the elastic washer.

16. The electronic apparatus according to claim 15, wherein:
the cam unit further includes a stopper disposed between the first hinge part and the second hinge part and provided with two stopper parts protruding in a centrifugal direction to form an obtuse angle; and
the first cam includes a latch part latched to a latch groove provided on the second hinge part and protruding between the two stopper parts.

17. The electronic apparatus according to claim 15, further comprising:
a concave part formed on one of the first cam surface and the second cam surface and a convex part formed on the other of the first cam surface and the second cam surface,
wherein the concave part and the convex part are located at positions corresponding to each other when an angle between the first member and the second member is 10 degrees or less.

18. The electronic apparatus according to claim 17, wherein remaining regions of the first cam surface and the second cam surface except for the concave part and the convex part are formed in parallel with each other.

19. An electronic apparatus comprising:
a first member;
a second member movably installed on the first member to open and close a front surface of the first member;
a connection line to electrically connect the first member and the second member to each other; and
a sliding device to moveably install the second member on the first member,
wherein:
the second member includes a rear plate forming a rear surface of the second member and provided with a through hole through which the connection line passes; and
the sliding device includes an opening and closing member to open and close the through hole as the second member moves and opens the front surface of the first member.

20. The electronic apparatus according to claim 19, wherein the sliding device includes a pair of first sliders installed on the first member and provided with first rail parts formed at both sides thereof, a pair of second sliders installed on the second member and provided with second rail parts formed at both sides thereof and movably installed on the first rail parts, a pair of elastic support units, each of which includes a first end rotatably installed on the pair of first slider and a second end provided at the side opposite to the first end and rotatably installed on the rear plate, and an interlocking member to operate the opening and closing member in connection with the pair of elastic support units.

21. The electronic apparatus according to claim 20, wherein:
the interlocking member includes a pair of interlocking holes formed at both sides thereof and extending in a direction perpendicular to a moving direction of the second member;
the sliding device further includes a pair of interlocking pins passing through the interlocking holes and fixed to interlocking parts provided at the pair of elastic support units; and
head parts of the pair of interlocking pins are supported by parts of the interlocking member adjacent to the pair of interlocking holes.

22. The electronic apparatus according to claim 19, further comprising:
a movement guide installed on the rear plate and provided with a guide hole in which the opening and closing member is movably installed,
wherein a partial region of the guide hole is located at a position corresponding to the through hole.
